# FASCICULE DE BREVET EUROPEEN

(11) **EP 3 447 998 B1**
(45) Date de publication et mention de la délivrance du brevet: **20.04.2022**
(21) Numéro de dépôt: 18190091.1
(22) Date de dépôt: 21.08.2018
(51) Int. Cl.: H04L 29/08, H04L 12/58, H04L 12/18, H04L 29/06, H04W 4/06, H04W 4/08, H04W 4/16, H04W 4/12

(54) **PROCÉDÉ DE FILTRAGE DYNAMIQUE D'UNE COMMUNICATION DE GROUPE**
VERFAHREN ZUM DYNAMISCHEN FILTERN EINER KOMMUNIKATIONSGRUPPE
METHOD FOR DYNAMIC FILTERING OF A GROUP COMMUNICATION

(30) Priorité: 23.08.2017 FR 1757822
(43) Date de publication de la demande: 27.02.2019
(73) Titulaire: Streamwide, 75010 Paris (FR)
(72) Inventeur: ROLLAND, Laëtitia, 92140 Clamart (FR)
(74) Mandataire: Plasseraud IP

(56) Documents cités:
- EP-A1- 1 569 488
- EP-A1- 2 849 383
- US-A1- 2007 124 381

## Description

### DOMAINE DE L'INVENTION

L'invention concerne un procédé de gestion dynamique de communications de groupe. Les communications considérées peuvent notamment comprendre l'envoi de messages multimédia, une conversation par messagerie instantanée ou encore des appels de groupe.

### ETAT DE LA TECHNIQUE

Des terminaux de télécommunication actuels tels que des téléphones mobiles (ou smartphone, ou encore terminal de poche), tablettes tactiles ou ordinateurs portables peuvent exécuter des applications de communication, qui permettent l'établissement de communications audio et/ou vidéo ou encore l'envoi de messages textuels entre deux utilisateurs ou plus de l'application. C'est le cas par exemple d'applications de messagerie instantanée qui permettent de créer une conversation par messagerie instantanée entre plusieurs utilisateurs.

Pour cela les terminaux transmettent des messages ou fichiers multimédias par un réseau de données multimédia tel que par exemple GPRS, EDGE, H, H+, 3G, 4G, WIFI, internet. Par « message multimédia », on entend un message comportant un ou plusieurs contenus multimédias tels qu'une image, une vidéo, un contenu audio ou autre. La communication entre les terminaux est assurée par un serveur de messagerie via le réseau de données multimédia.

Certaines applications de communication permettent de définir des groupes de discussion dont les membres (choisis parmi les utilisateurs de l'application) sont sélectionnés lors de la création du groupe. Ces groupes permettent à un utilisateur de l'application de communiquer facilement et rapidement avec l'ensemble des membres d'un groupe sans avoir besoin d'en sélectionner les membres à chaque nouvelle communication, par exemple à chaque nouvel envoi de message.

La composition du groupe ne peut en général pas être modifiée de façon simple et rapide.

En particulier, dans certains cas, la création et la diffusion des groupes sont réalisées par un administrateur, ce qui restreint encore plus la possibilité de modifier la composition des groupes.

Or, il peut arriver que certains membres du groupe ne soient pas en permanence concernés par les communications diffusées au sein de l'application, et reçoivent néanmoins ces communications. Ces communications constituent alors un surcroît indésirable d'informations pour un utilisateur.

Par exemple, on peut envisager le cas d'un groupe de professionnels pouvant faire périodiquement partie d'une équipe de garde ou d'astreinte, la composition de l'équipe de garde ou d'astreinte variant pour effectuer une rotation des tours de garde.

Dans ce cas, il n'est pas souhaitable de devoir définir un nouveau groupe correspondant à chaque nouvelle équipe de garde ou d'astreinte. Il n'est pas souhaitable non plus que l'ensemble des membres du groupe pouvant être de garde ou d'astreinte reçoive toutes les communications relatives à une garde ponctuelle et ne concernant donc que les personnes effectivement de garde.

Il existe donc un besoin pour une solution plus souple permettant de faire varier la composition d'un groupe de destinataires d'une communication.

Le document US 2007/0124381 A1 décrit un système dans lequel un terminal peut décider d'établir une communication immédiatement, uniquement des membres qui sont disponibles, ou ultérieurement avec tous les membres une fois qu'ils seront tous disponibles.

Le document EP 1569488 A1 décrit un système de type « push-to-talk » ou « talkie-walkie » permettant à chaque membre d'un groupe d'indiquer qu'il ne souhaite par défaut pas être dérangé et, le cas échéant, d'indiquer s'il existe des raisons spécifiques pour lesquelles ce membre peut néanmoins être dérangé.

### PRESENTATION DE L'INVENTION

Compte-tenu de ce qui précède, l'invention a pour but de proposer un procédé de gestion dynamique d'un groupe d'utilisateurs d'une application de communication.

En particulier, un but de l'invention est de fournir la possibilité aux membres du groupe de ne pas recevoir de communications adressées au groupe quand ils ne sont pas disponibles ou pas concernés par ces communications.

Un autre but de l'invention est de permettre aux membres du groupe de rejoindre simplement une conversation de groupe quand ils se rendent à nouveaux disponibles.

A cet égard, l'invention a pour objet un procédé de gestion de communications mis en oeuvre par un système, selon la revendication 1.

De préférence, l'étape d'établissement de la communication comprend en outre l'envoi par le terminal au serveur d'une requête d'établissement de la communication avec le groupe.

Dans certaines variantes de réalisation, le procédé est mis en œuvre par un système comprenant en outre un terminal administrateur, et comprend une étape préliminaire de paramétrage par un terminal administrateur du groupe comprenant l'activation d'une propriété de filtrage dynamique du groupe, et une étape d'enregistrement par le serveur du caractère activé de la propriété en lien avec le groupe.

Le procédé de gestion peut alors comprendre une étape de création ou d'édition du groupe mise en œuvre par le terminal administrateur, lors de laquelle est mise en œuvre ladite étape de paramétrage.

Avantageusement, le procédé de gestion comprend en outre l'affichage, sur une interface homme-machine de l'application de messagerie, d'au moins un identifiant d'un utilisateur de l'application associé à une icône de représentation du statut courant de l'utilisateur.

Selon le procédé, l'établissement d'une communication comprend l'un parmi le groupe consistant en :
- l'envoi d'un message multimédia au groupe,
- la création d'une conversation de groupe par messagerie instantanée,
- le lancement d'un appel de groupe, cet appel pouvant être de type appel en simplex, duplex, ou half-duplex.

Dans le cas où l'établissement de la communication est la création d'une conversation de groupe par messagerie instantanée, le procédé peut comprendre au moins une étape supplémentaire d'envoi d'un message dans la conversation de groupe par un terminal utilisateur, et l'envoi par le serveur du message à un ensemble de membres du groupe déterminé en fonction des statuts courants des membres.

Le procédé peut également comprendre une étape de changement de statut d'un utilisateur, comprenant :
- l'envoi par le terminal de l'utilisateur au serveur d'une requête de changement de statut,
- la mise à jour par le serveur du statut courant de l'utilisateur enregistré dans la mémoire, et
- l'envoi par le serveur d'une notification de mise à jour à au moins un terminal d'un utilisateur.

L'invention a également pour objet un produit programme d'ordinateur selon la revendication 9.

Un autre objet de l'invention est un serveur de gestion de communications selon la revendication 10.

L'invention porte enfin sur un système informatique selon la revendication 11.

Le procédé selon l'invention permet de filtrer de façon dynamique les membres d'un groupe avec lesquels une communication est établie.

Pour cela, un utilisateur peut sélectionner une règle de communication avec le groupe lui permettant soit de communiquer avec tous les membres du groupe, soit avec seulement une partie des membres présentant un statut particulier. Les utilisateurs peuvent notamment sélectionner un statut leur permettant de ne pas recevoir de messages ou d'appels de groupe lorsqu'ils ne sont pas disponibles.

De cette manière on peut avantageusement faire varier la composition du groupe en fonction des circonstances et de la disponibilité de ses membres. De plus, on peut sensiblement réduire les communications qui parviennent à un membre non disponible.

### DESCRIPTION DES FIGURES

D'autres caractéristiques, buts et avantages de l'invention ressortiront de la description qui suit, qui est purement illustrative et non limitative, et qui doit être lue en regard des dessins annexés sur lesquels:
- La figure 1a représente la mise en œuvre d'un changement de statut d'un utilisateur d'une application de communication
- La figure 1b représente l'établissement d'une communication avec les membres d'un groupe présentant le statut disponible,
- La figure 1c représente la configuration d'un groupe d'utilisateurs par un administrateur,
- La figure 2a représente schématiquement les principales étapes de la mise en œuvre d'un changement de statut d'un utilisateur,
- La figure 2b représente schématiquement les principales étapes de la mise en œuvre de l'établissement d'une communication avec les membres d'un groupe,
- La figure 2c représente schématiquement les principales étapes de la mise en œuvre d'une configuration d'un groupe d'utilisateurs,
- La figure 3 représente un exemple d'affichage d'interface homme-machine de l'application présentant la sélection d'un statut d'un utilisateur.
- La figure 4 représente un exemple d'affichage des statuts des utilisateurs sur une interface homme machine de l'application,
- La figure 5 représente un exemple d'affichage de la sélection d'un paramètre d'une communication sur une interface homme machine de l'application,
- La figure 6 représente un exemple d'affichage de la configuration d'un groupe d'utilisateurs sur une interface homme machine de l'application.

### DESCRIPTION DETAILLEE D'AU MOINS UN MODE DE REALISATION DE L'INVENTION

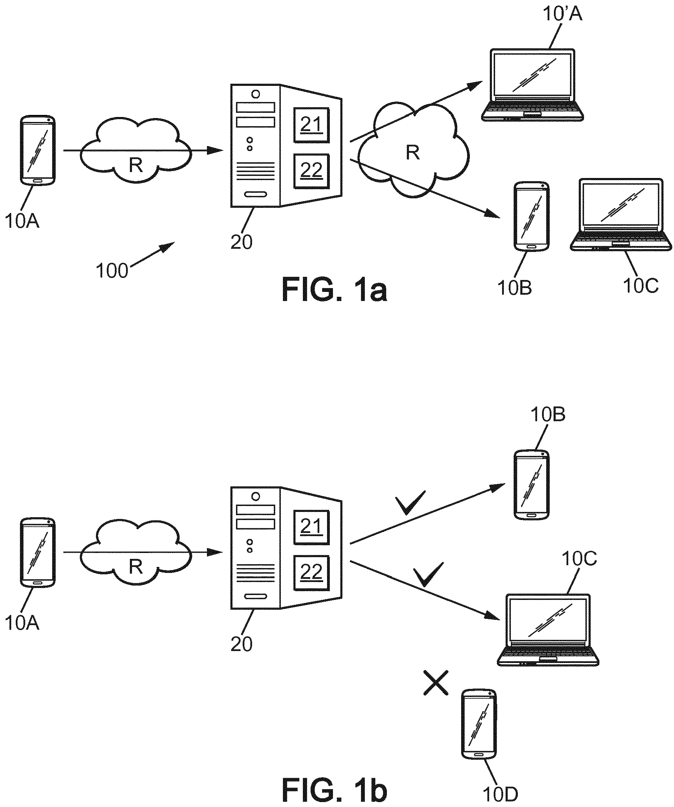

On va maintenant décrire, en référence aux figures, un procédé de gestion de communications. Ce procédé est mis en oeuvre par un système informatique 1 représenté sur les figures 1a à 1c, comprenant :
- au moins un terminal 10 d'un utilisateur, et
- un serveur 20 de gestion de communications.

Le terminal 10 et le serveur 20 sont aptes à communiquer entre eux via un réseau de données multimédia R.

On entend par « réseau de données multimédia » tout réseau de communication qui utilise un ensemble de protocoles de communication, à transferts par paquets ou non, apte à faire transiter des données multimédia telles que du texte, du son, de la parole, des images et/ou de la vidéo. On peut citer par exemple les protocoles GPRS, EDGE, UMTS, 3G, 4G, WIFI, WIMAX, Internet, etc.

On entend par « terminal » de télécommunication un dispositif électronique, mobile ou non, tel qu'un téléphone mobile, un smartphone, une tablette numérique, ou un ordinateur, comportant typiquement un processeur, une mémoire, une interface de communication avec le réseau. Le terminal est adapté pour mettre en oeuvre un programme informatique, et notamment une application de communication, sous la forme d'un logiciel comprenant des instructions de code exécutables enregistrées en mémoire.

Dans un mode de réalisation préféré, les communications sont mises en œuvre dans le cadre d'une application, qui peut être notamment une application mobile ou une application web à laquelle un utilisateur accède grâce à un navigateur web, sur un terminal fixe ou mobile.

Le serveur 20 est apte à recevoir, stocker, gérer et transmettre des messages multimédias entre deux terminaux hébergeant le programme/l'application de communication. Il comprend à cet égard un processeur 21 ainsi qu'une mémoire 22, dans laquelle sont stockés :
- l'ensemble des identifiants des utilisateurs de l'application, chaque identifiant étant stocké en lien avec un ou plusieurs identifiants de connexion d'un terminal respectif de l'utilisateur, et en lien avec un statut de l'utilisateur,
- la définition d'un ou plusieurs groupes d'utilisateurs, chaque groupe comprenant une liste d'identifiants d'utilisateurs.

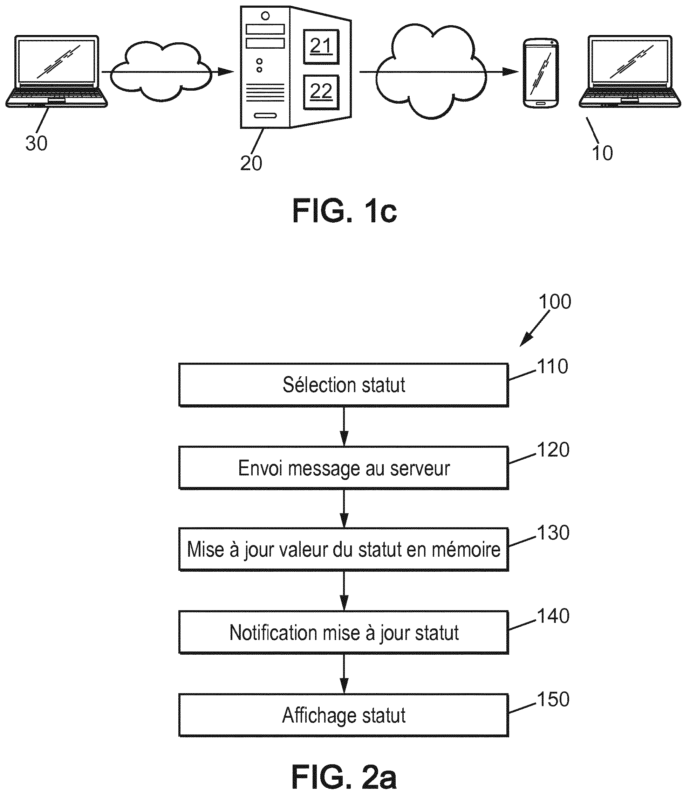

En particulier, et comme représenté sur la figure 1, un utilisateur A peut avoir plusieurs terminaux 10A, 10'A, chaque terminal hébergeant le programme pour mettre en œuvre les communications de groupe.

Dans le cadre de l'invention, un utilisateur peut établir une communication avec un ou plusieurs autre(s) utilisateur(s), ou avec un groupe d'utilisateurs, la communication comprenant l'une au moins parmi les formes de communication suivantes :
- envoi et réception d'un message multimédia,
- création d'une conversation en messagerie instantanée et participation à la conversation,
- lancement d'un appel de groupe, et participation à l'appel.

L'appel de groupe peut notamment être mis en oeuvre par des canaux de communication duplex, simplex, ou encore half-duplex, ce mode dernier de communication étant également dénommé appel de type « talkie-walkie » ou de type « push-to-talk ».

Un utilisateur peut également définir un ensemble de contacts parmi les autres utilisateurs et groupes d'utilisateurs, les contacts étant enregistrés dans une mémoire d'un terminal de l'utilisateur ou dans une mémoire distante à laquelle le terminal peut accéder (non représentée).

### Configuration d'un statut d'un utilisateur

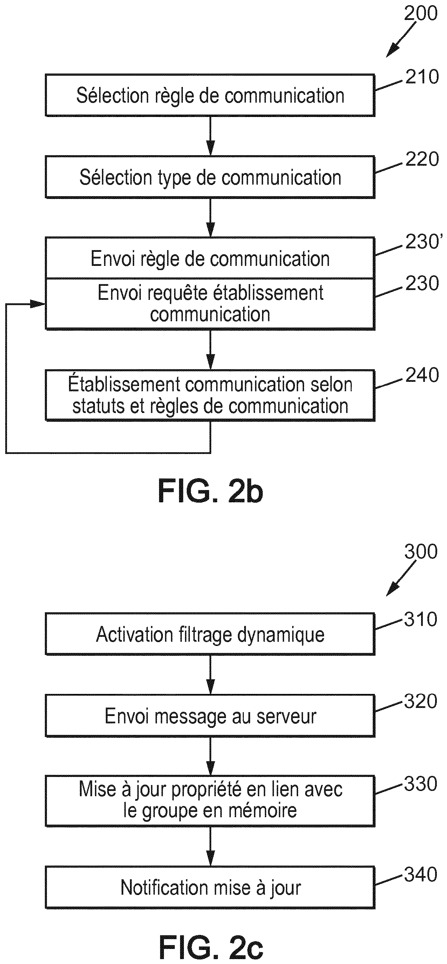

En référence à la figure 1a et à la figure 2a, on a représenté la mise en œuvre d'une étape de configuration d'un statut courant 100 d'un utilisateur A. Chaque utilisateur membre d'un groupe peut choisir son statut courant entre un statut dit « disponible », et un statut dit « indisponible », qui lui permet de ne pas recevoir les communications adressées au groupe tant qu'il a ce statut.

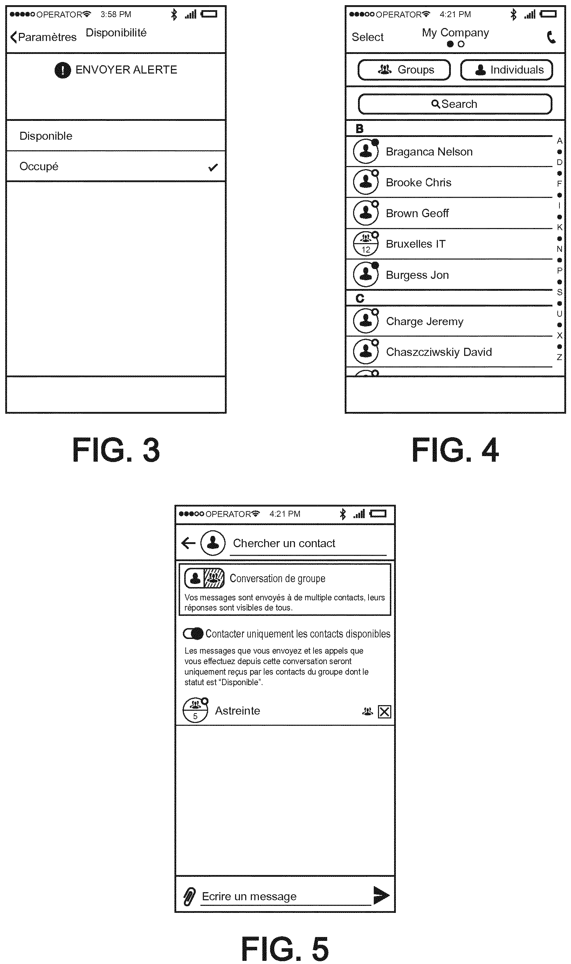

En référence à la figure 3, le changement de statut courant par un utilisateur A est mis en oeuvre par la sélection d'un statut 110 sur l'interface homme machine de l'application de communication. Une fois le statut sélectionné, le terminal 10A de l'utilisateur envoie 120 un message au serveur 20 indiquant le statut sélectionné. Le serveur met à jour 130 en mémoire la valeur du statut courant qui est enregistré en lien avec l'identifiant de l'utilisateur. Puis le serveur envoie 140 à un ensemble d'utilisateurs, pouvant être l'ensemble des contacts de l'utilisateur, une notification informant l'état du statut courant de l'utilisateur A. Ensuite, l'interface homme machine d'un terminal d'un des utilisateurs ayant reçu la notification affiche 150 avantageusement le statut courant de l'utilisateur ainsi modifié. Par exemple, comme dans la figure 4, l'interface homme machine d'une application peut afficher une liste d'identifiants de contacts d'un utilisateur et, associé à chaque contact, une icône représentant le statut courant de l'utilisateur.

### Filtrage d'une communication de groupe

En référence à la figure 1b et à la figure 2b, on a représenté la mise en oeuvre d'une étape d'établissement 200 d'une communication entre un terminal 10A d'un utilisateur et un groupe.

Cette étape comprend la sélection 210 par un utilisateur, sur l'interface homme machine de l'application sur son terminal, d'une règle de communication. Cette règle de communication est choisie parmi :
- une règle de communication dite restreinte selon laquelle la communication ne doit être établie qu'avec les membres du groupe présentant le statut disponible, et
- une règle de communication dite élargie selon laquelle la communication doit être établie avec tous les membres du groupe.

La sélection de la règle peut être présentée comme l'activation ou non d'une propriété de communications sous la règle de communication restreinte, comme c'est le cas sur l'exemple d'interface homme machine représenté sur la figure 5.

L'étape 200 comprend aussi avantageusement la sélection 220 par un utilisateur d'un type de communication qu'il souhaite établir avec le groupe, par exemple l'envoi d'un message ponctuel, ou l'ouverture d'une conversation de groupe par messagerie instantanée, ou encore le lancement d'un appel de groupe.

Puis le terminal de l'utilisateur envoie 230 au serveur 20 une requête d'établissement de la communication sélectionnée, et envoie 230' la règle de communication choisie par l'utilisateur. Avantageusement, la requête d'établissement de la communication et la règle de communication sont envoyées dans un seul et même message.

Le serveur établit 240 ensuite la communication entre le terminal utilisateur 10A et un ensemble de membres du groupe, cet ensemble étant déterminé en fonction de la règle de communication et des statuts courants des membres du groupe. Le serveur réalise donc un filtrage dynamique des membres du groupe avec qui la communication est établie, en fonction du statut courant de chaque membre au moment où la communication est établie.

En particulier, dans le cas où la règle de communication choisie est la règle de communication élargie, le serveur 240 établit la communication avec tous les membres du groupe indépendamment de leur statut.

En revanche, dans le cas où la règle de communication est la règle de communication restreinte, le serveur 240 n'établit la communication qu'avec les membres du groupe présentant le statut disponible. Sur la figure 1b, on a représenté schématiquement les terminaux 10B et 10C d'utilisateurs B et C disponibles, et le terminal 10D d'un utilisateur D indisponible. Dans cet exemple, le terminal 10A envoie une requête au serveur d'établissement d'une communication restreinte avec le groupe {B, C, D}, et le serveur n'établit la communication qu'avec les utilisateurs B et C.

Plus précisément, dans le cas où la communication établie par le terminal 10A est l'envoi d'un message, les membres du groupe présentant le statut disponible reçoivent le message envoyé par le terminal 10A ainsi qu'une notification de la réception d'un nouveau message. En revanche les membres du groupe présentant le statut indisponible ne reçoivent ni le message, ni une notification qu'un message a été envoyé par le terminal 10A.

Dans le cas où la communication établie par le terminal est le lancement d'une conversation de groupe, ce lancement s'accompagnant généralement de l'envoi d'un message instantanée, seul les membres du groupe disponibles reçoivent le message dans la conversation de groupe créée ainsi qu'une notification de la réception du message. Les membres indisponibles ne reçoivent ni notification, ni nouveau message, ni ne peuvent voir la conversation de groupe dans une liste de conversations de l'interface homme machine de l'application.

Dans le cas où la communication établie par le terminal est le lancement d'un appel de groupe, les membres du groupe ayant le statut disponible sont notifiés par le serveur de l'appel et peuvent accepter l'appel, tandis que les membres ayant le statut indisponible ne sont pas notifiés de l'appel.

Avantageusement, le lancement d'un appel de groupe s'accompagne de la création automatique par le serveur d'une conversation de groupe par messagerie instantanée dans laquelle tous les membres du groupe disponibles lors du lancement de l'appel sont inclus.

Quand la communication établie est la création d'une conversation de groupe par messagerie instantanée (conversation créée à l'initiative d'un terminal d'un utilisateur, ou du serveur dans le cas d'une conversation simultanée à un appel de groupe), les étapes 230 d'envoi d'un message par un terminal utilisateur dans la conversation et 240 de détermination par le serveur des membres du groupe disponibles pour l'envoi du message sont mises en oeuvre pour tout nouveau message envoyé dans la conversation.

De la sorte, un membre indisponible du groupe ne reçoit aucun message de la conversation ni aucune notification de nouveau message. La conversation de groupe n'est pas non plus affichée dans une liste de conversations sur l'interface homme machine du terminal de ce membre. En revanche, s'il change ensuite de statut pour présenter le statut disponible, il reçoit et est notifié des nouveaux messages envoyés dans la conversation à partir de son changement de statut. La conversation apparaît sur l'interface homme machine du terminal de ce membre au premier message reçu.

Un membre du groupe changeant du statut disponible au statut indisponible, et le cas échéant l'utilisateur ayant démarré la conversation, ne reçoit plus aucun message ni notification de nouveau message à partir de son changement de statut. Avantageusement, les changements de statut des membres du groupe ne sont pas notifiés aux autres membres dans la conversation.

### Paramétrage d'un groupe

Selon un mode de réalisation particulier de l'invention, on peut prévoir que seuls certains groupes d'utilisateurs soient paramétrés pour permettre la fonctionnalité de filtrage décrite ci-dessus.

En référence à la figure 1c, ce paramétrage peut avantageusement être réalisé par un terminal administrateur 30. Le terminal administrateur 30 comprend un processeur adapté pour exécuter le programme ou application de communication et une mémoire pour stocker les lignes de codes du programme. Il comprend aussi une interface de communication avec le réseau multimédia R, lui permettant de communiquer avec le serveur 20 via le réseau.

L'étape 300 de paramétrage comprend alors l'activation 310 par un administrateur, sur l'interface homme-machine de l'application sur le terminal, d'une propriété de filtrage dynamique associée au groupe. Le terminal 30 envoie 320 ensuite au serveur un message pour informer au serveur du caractère activé de la propriété. Le serveur met à jour la mémoire 330 pour enregistrer le caractère activé de la propriété en lien avec le groupe. Le serveur envoie 340 ensuite à un ensemble de terminaux d'utilisateurs de l'application, par exemple tous les terminaux d'utilisateurs membres du groupe, un message de mise à jour permettant aux destinataires de sélectionner la règle de communication selon l'étape 210 pour toutes les nouvelles communications à établir avec ce groupe.

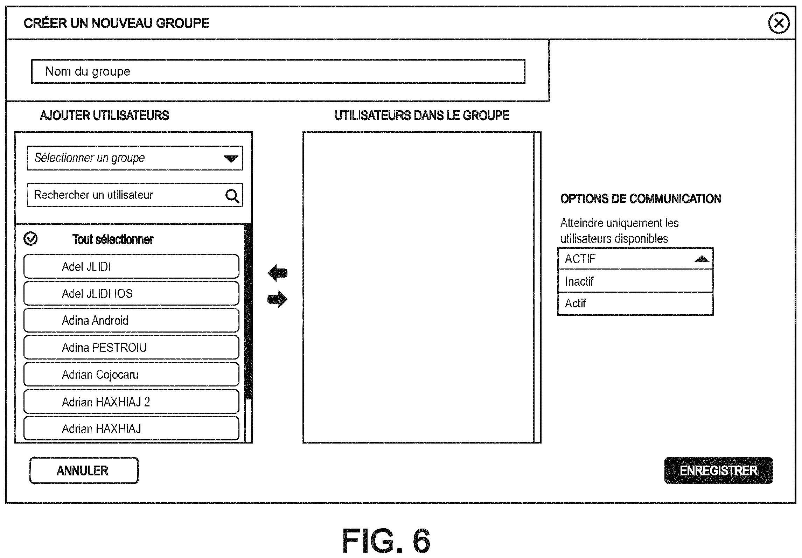

Avantageusement, mais facultativement, cette étape de paramétrage est mise en œuvre lors de la création ou lors d'une édition du groupe par l'administrateur, comme c'est le cas dans l'exemple représenté en figure 6, ou une page d'une interface homme-machine d'un terminal administrateur est représenté, et où l'administrateur a la possibilité d'activer ou non l'option de communication « Atteindre uniquement les utilisateurs disponibles ».

Ainsi le procédé de gestion décrit ci-avant permet à chaque utilisateur de définir un statut disponible ou non, qui est visible pour les autres utilisateurs, et donne la possibilité de filtrer l'établissement de communication en fonction du statut des utilisateurs. La quantité de messages indésirés reçus par un utilisateur peut donc être réduite, ce qui permet une meilleure visibilité des messages pertinents.

## Revendications

1. Procédé de gestion de communications, mis en œuvre par un système comprenant au moins un terminal (10) utilisateur et un serveur (20) de gestion des communications,
le serveur (20) comprenant une mémoire (22) dans laquelle sont enregistrés :
- pour chaque utilisateur, un identifiant de l'utilisateur associé à un statut courant de l'utilisateur et au moins un identifiant de terminal, et
- une définition d'au moins un groupe d'utilisateurs contenant la liste des identifiants des utilisateurs membres du groupe,
le procédé comprenant une étape (200) d'établissement d'une communication entre le terminal utilisateur et ledit au moins un groupe, tel que, lors de ladite étape:
- le terminal sélectionne (210) une règle de communication parmi :
∘ une règle de communication dite restreinte selon laquelle la communication ne doit être établie qu'avec les membres du groupe présentant un statut courant disponible au moment où la communication est établie, et
∘ une règle de communication dite élargie selon laquelle la communication doit être établie avec tous les membres du groupe indépendamment du fait que leur statut courant soit disponible ou indisponible au moment où la communication est établie,
- le terminal envoie (230') au serveur la règle de communication sélectionnée, et
- le serveur établit (240) la communication entre le terminal utilisateur et un ensemble de terminaux d'utilisateurs membres du groupe, ledit ensemble étant déterminé à partir de la règle de communication et des statuts courants des utilisateurs membres du groupe, le serveur n'établissant la communication qu'avec les membres du groupe présentant un statut courant disponible si la règle de communication est la règle de communication restreinte, et ledit serveur établissant la communication avec tous les membres du groupe indépendamment du fait que leur statut courant soit disponible ou indisponible si la règle de communication est la règle de communication élargie.

2. Procédé de gestion selon la revendication 1, dans lequel l'étape d'établissement (200) de la communication comprend en outre l'envoi (230) par le terminal (10) au serveur (20) d'une requête d'établissement de la communication avec le groupe.

3. Procédé de gestion selon l'une des revendications 1 ou 2, mis en œuvre par un système comprenant en outre un terminal administrateur (30),
le procédé comprenant une étape préliminaire de paramétrage (300) par un terminal administrateur du groupe comprenant l'activation (310) d'une propriété de filtrage dynamique du groupe, et une étape d'enregistrement (330) par le serveur du caractère activé de la propriété en lien avec le groupe.

4. Procédé de gestion selon la revendication 3, comprenant en outre une étape de création ou d'édition du groupe mise en œuvre par le terminal administrateur, lors de laquelle est mise en œuvre ladite étape de paramétrage (300).

5. Procédé de gestion selon l'une des revendications précédentes, comprenant en outre l'affichage (150), sur une interface homme-machine de l'application de messagerie, d'au moins un identifiant d'un utilisateur de l'application associé à une icône de représentation du statut courant de l'utilisateur.

6. Procédé de gestion selon l'une des revendications précédentes, dans lequel l'établissement d'une communication comprend l'un parmi le groupe consistant en :
- l'envoi d'un message multimédia au groupe,
- la création d'une conversation de groupe par messagerie instantanée,
- le lancement d'un appel de groupe.

7. Procédé de gestion selon l'une des revendications précédentes, dans lequel l'établissement de la communication est la création d'une conversation de groupe par messagerie instantanée,
et le procédé comprend au moins une étape supplémentaire d'envoi (230) d'un message dans la conversation de groupe par un terminal utilisateur, et l'envoi (240) par le serveur du message à un ensemble de membres du groupe déterminé en fonction des statuts courants des membres.

8. Procédé de gestion selon l'une des revendications précédentes, comprenant en outre une étape (100) de changement de statut d'un utilisateur, comprenant :
- l'envoi (120) par le terminal de l'utilisateur au serveur d'une requête de changement de statut,
- la mise à jour (130) par le serveur du statut courant de l'utilisateur enregistré dans la mémoire, et
- l'envoi par le serveur (140) d'une notification de mise à jour à au moins un terminal d'un utilisateur.

9. Produit programme d'ordinateur, comprenant des instructions pour la mise en œuvre d'un procédé comprenant :
- la réception d'une requête d'établissement d'une communication avec un groupe d'utilisateurs, la requête comprenant une règle de communication (230, 230') sélectionnée parmi :
∘ une règle de communication dite restreinte selon laquelle la communication ne doit être établie qu'avec les membres du groupe d'utilisateurs présentant un statut courant disponible au moment où la communication est établie, et
∘ une règle de communication dite élargie selon laquelle la communication doit être établie avec tous les membres du groupe d'utilisateurs indépendamment du fait que leur statut courant soit disponible ou indisponible au moment où la communication est établie, et
- l'établissement d'une communication (240) avec un ensemble de terminaux de membres du groupe d'utilisateurs, ledit ensemble étant déterminé à partir de la règle de communication et de valeurs de statuts courants d'utilisateurs associés aux terminaux, la communication n'étant établie qu'avec les membres du groupe présentant un statut courant disponible si la règle de communication est la règle de communication restreinte, et la communication étant établie avec tous les membres du groupe indépendamment du fait que leur statut courant soit disponible ou indisponible si la règle de communication est la règle de communication élargie, quand il est exécuté par un processeur.

10. Serveur (20) de gestion de communications, comprenant :
- une mémoire (22) configurée pour sauvegarder:
∘ une liste d'identifiants d'utilisateurs, chaque identifiant étant associé à un statut courant de l'utilisateur, et
∘ une définition d'au moins un groupe d'utilisateurs contenant la liste des identifiants des utilisateurs membres du groupe,
- un processeur (21) configuré pour exécuter le produit programme d'ordinateur selon la revendication 9.

11. Système informatique comprenant un serveur (20) selon la revendication 10 et au moins un terminal (10) de télécommunication, ledit terminal étant adapté pour exécuter un programme de communication et comprenant :
- une interface de connexion à un réseau de données multimédia,
- des moyens d'affichage d'une interface homme-machine,
- une interface de saisie d'instructions, et
- un processeur, configuré pour :
∘ sélectionner (210) une règle de communication parmi la règle de communication restreinte et la règle de communication élargie, et
∘ envoyer (230') au serveur la règle de communication sélectionnée avec une requête (230) d'établissement d'une communication.

## Patentansprüche

1. Kommunikationsverwaltungsverfahren, das von einem System durchgeführt wird, das mindestens ein Benutzer-Endgerät (10) und einen Kommunikationsverwaltung-Server (20) aufweist,
wobei der Server (20) einen Speicher (22) aufweist, in dem registriert sind:
- für jeden Benutzer ein Benutzer-Identifikator, der mit einem aktuellen Status des Benutzers verknüpft ist, und mindestens ein Endgerät-Identifikator, und
- eine Definition mindestens einer Gruppe von Benutzern, die die Liste der Identifikatoren der Benutzer, die Mitglieder der Gruppe sind, enthält,
wobei das Verfahren einen Schritt (200) zum Herstellen einer Kommunikation zwischen dem Benutzer-Endgerät und der mindestens einen Gruppe aufweist, derart, dass in dem Schritt:
- das Endgerät eine Kommunikationsregel auswählt (210) unter
^{∗} einer sogenannten restriktiven Kommunikationsregel, gemäß welcher die Kommunikation nur mit denjenigen Mitgliedern der Gruppe hergestellt werden soll, die an dem Zeitpunkt, an dem die Kommunikation hergestellt wird, einen aktuellen Status "verfügbar" haben, und
^{∗} einer sogenannten erweiterten Kommunikationsregel, gemäß welcher die Kommunikation mit allen Mitgliedern der Gruppe hergestellt werden soll, unabhängig von der Tatsache, ob an dem Zeitpunkt, an dem die Kommunikation hergestellt wird, ihr aktueller Status "verfügbar" oder "nichtverfügbar" ist,
- das Endgerät die ausgewählte Kommunikationsregel zu dem Server schickt (230'), und
- der Server die Kommunikation zwischen dem Benutzer-Endgerät und einem Satz von Endgeräten von Benutzern, die Mitglieder der Gruppe sind, herstellt (240), wobei der Satz anhand der Kommunikationsregel und der aktuellen Statuswerte der Benutzer, die Mitglieder der Gruppe sind, bestimmt wird, wobei der Server die Kommunikation nur mit denjenigen Mitgliedern der Gruppe herstellt, die einen aktuellen Status "verfügbar" haben, falls die Kommunikationsregel die restriktive Kommunikationsregel ist, und der Server die Kommunikation mit allen Mitgliedern der Gruppe herstellt, unabhängig von der Tatsache, ob ihr aktueller Status "verfügbar" oder "nichtverfügbar" ist, falls die Kommunikationsregel die erweiterte Kommunikationsregel ist.

2. Verwaltungsverfahren nach Anspruch 1, in welchem der Schritt zum Herstellen (200) der Kommunikation ferner aufweist: Schicken (230) einer Anfrage zum Herstellen der Kommunikation mit der Gruppe von dem Endgerät (10) zu dem Server (20).

3. Verwaltungsverfahren nach einem der Ansprüche 1 oder 2, das von einem System durchgeführt wird, das außerdem ein Administrator-Endgerät (30) aufweist,
wobei das Verfahren aufweist: einen vorausgehenden Schritt einer Parametrisierung (300) durch ein Administrator-Endgerät der Gruppe, der die Aktivierung (310) einer Eigenschaft zum dynamischen Filtern der Gruppe aufweist, und einen Schritt einer Registrierung (330) des aktivierten Zeichens der Eigenschaft in Verknüpfung mit der Gruppe durch den Server.

4. Verwaltungsverfahren nach Anspruch 3, aufweisend ferner einen Schritt eines Erstellens oder Editierens der Gruppe, der von dem Administrator-Endgerät durchgeführt wird, wenn dieses den Parametrisierungsschritt (300) durchführt.

5. Verwaltungsverfahren nach einem der vorstehenden Ansprüche, ferner aufweisend das Anzeigen (150) mindestens eines Identifikators eines Benutzers der Anwendung verknüpft mit einem den aktuellen Status des Benutzers repräsentierenden Symbol auf einer Mensch-Maschine-Schnittstelle der Nachrichtendienst-Anwendung.

6. Verwaltungsverfahren nach einem der vorstehenden Ansprüche, in welchem das Herstellen einer Kommunikation mindestens einen der folgenden Vorgänge aufweist:
- Schicken einer Multimedia-Nachricht zu der Gruppe,
- Eröffnen einer Chat-Gruppenkonversation,
- Aussenden eines Gruppenanrufs.

7. Verwaltungsverfahren nach einem der vorstehenden Ansprüche, in welchem das Herstellen der Kommunikation das Eröffnen einer Chat-Gruppenkonversation ist,
und das Verfahren mindestens einen zusätzlichen Schritt aufweist, in dem in der Gruppenkonversation eine Nachricht von einem Benutzer-Endgerät geschickt wird (230) und die Nachricht von dem Server zu einem Satz von Mitgliedern der Gruppe, der in Abhängigkeit von den aktuellen Statuswerten der Mitglieder bestimmt ist, geschickt wird (240).

8. Verwaltungsverfahren nach einem der vorstehenden Ansprüche, aufweisend ferner einen Schritt (100) einer Änderung eines Status eines Benutzers, aufweisend:
- das Benutzer-Endgerät schickt (120) eine Statusänderungsanfrage zu dem Server,
- der Server aktualisiert (130) den in dem Speicher registrieren aktuellen Status des Benutzers, und
- der Server schickt (140) eine Aktualisierungsmeldung zu mindestens einem Endgerät eines Benutzers.

9. Computerprogrammprodukt, aufweisend Befehle zum Durchführen eines Verfahrens, aufweisend:
- Empfangen einer Anfrage zum Herstellen einer Kommunikation mit einer Gruppe von Benutzern, wobei die Anfrage eine Kommunikationsregel (230, 230') aufweist, ausgewählt unter:
^{∗} einer sogenannten restriktiven Kommunikationsregel, gemäß welcher die Kommunikation nur mit denjenigen Mitgliedern der Benutzergruppe hergestellt werden soll, die an dem Zeitpunkt, an dem die Kommunikation hergestellt wird, einen aktuellen Status "verfügbar" haben, und
^{∗} einer sogenannten erweiterten Kommunikationsregel, gemäß welcher die Kommunikation mit allen Mitgliedern der Benutzergruppe hergestellt werden soll, unabhängig von der Tatsache, ob an dem Zeitpunkt, an dem die Kommunikation hergestellt wird, ihr aktueller Status "verfügbar" oder "nichtverfügbar" ist,
- Herstellen (240) einer Kommunikation mit einem Satz von Endgeräten von Mitgliedern der Benutzergruppe, wobei der Satz anhand der Kommunikationsregel und von aktuellen Statuswerten der Benutzer, denen die Endgeräte zugeordnet sind, bestimmt wird, wobei die Kommunikation nur mit denjenigen Mitgliedern der Gruppe hergestellt wird, die einen aktuellen Status "verfügbar" haben, falls die Kommunikationsregel die restriktive Kommunikationsregel ist, und die Kommunikation mit allen Mitgliedern der Gruppe hergestellt wird, unabhängig von der Tatsache, ob ihr aktueller Status "verfügbar" oder "nichtverfügbar" ist, falls die Kommunikationsregel die erweiterte Kommunikationsregel ist,
wenn es von einem Prozessor ausgeführt wird.

10. Kommunikationsverwaltung-Server (20) aufweisend:
- einen Speicher (22) zum Speichern
^{∗} einer Liste von Benutzer-Identifikatoren, wobei jeder Identifikator mit einem aktuellen Status des Benutzers verknüpft ist, und
^{∗} einer Definition mindestens einer Gruppe von Benutzern, die die Liste der Identifikatoren der Benutzer, die Mitglieder der Gruppe sind, enthält,
- einen Prozessor (21) zum Ausführen des Computerprogrammprodukts nach Anspruch 9.

11. Computersystem aufweisend einen Server (20) nach Anspruch 10 und mindestens ein Telekommunikationsendgerät (10), wobei das Endgerät angepasst ist, um ein Kommunikationsprogramm auszuführen, und aufweist:
- eine Verbindungsschnittstelle mit einem Multimediadatennetz,
- Anzeigeeinrichtungen einer Mensch-Maschine-Schnittstelle,
- eine Befehlserfassung-Schnittstelle, und
- einen Prozessor, der konfiguriert ist, um
^{∗} eine Kommunikationsregel unter der restriktiven Kommunikationsregel und der erweiterten Kommunikationsregel auszuwählen (210), und
^{∗} dem Server die ausgewählte Kommunikationsregel zusammen mit einer Anfrage (230) zur Herstellung einer Kommunikation zu schicken (230').

## Claims

1. A communications management method, implemented by a system comprising at least one user terminal (10) and a communications management server (20),
the communications management server (20) comprising a memory (22) in which are stored:
- for each user, an identifier of the user associated with a current status of the user and at least one terminal identifier, and
- a definition of at least one group of users containing the list of identifiers of the users who are members of the group,
the method comprising a step (200) of establishing a communication between the user terminal and said at least one group, wherein, during said step:
- the terminal selects (210) a communication rule among:
∘ a communication rule referred to as restricted according to which the communication is only to be established with members of the group having an available current status when the communication is established, and
∘ a communication rule referred to as extended according to which the communication is to be established with all members of the group regardless of whether their current status is available or unavailable when the communication is established,
- the terminal sends (230') to the server the selected communication rule, and
- the server establishes (240) the communication between the user terminal and a set of terminals of users members of the group, said set being determined based on the communication rule and the current statuses of the users members of the group, wherein the server establishes the communication only with the members of the group having an available current status if the communication rule is the restricted communication rule, and wherein the server establishes the communication with all members of the group of users regardless of whether their current status is available or unavailable if the communication rule is the extended communication rule.

2. The management method according to claim 1, wherein the step of establishing (200) the communication further comprises the sending (230), by the terminal (10) to the server (20), of a request to establish the communication with the group.

3. The management method according to one of claims 1 or 2, implemented by a system further comprising an administrator terminal (30),
the method comprising a preliminary step of configuration (300) by an administrator terminal of the group comprising the activation (310) of a dynamic filtering attribute of the group, and a step of storing (330) by the server the activated character of the attribute linked to the group.

4. The management method according to claim 3, further comprising a step of creating or editing the group implemented by the administrator terminal, during which said configuration (300) step is implemented.

5. The management method according to one of the preceding claims, further comprising the displaying (150), on a human-machine interface of the messaging application, of at least one identifier of a user of the application associated with an icon representing the current status of the user.

6. The management method according to one of the preceding claims, wherein the establishing of a communication comprises one among the group consisting of:
- sending a multimedia message to the group,
- creating a group chat via instant messaging,
- initiating a group call.

7. The management method according to one of the preceding claims, wherein the establishing of the communication is the creation of a group chat via instant messaging, and the method comprises at least one additional step of a user terminal sending (230) a message in the group chat, and the server sending (240) the message to a set of members of the group determined based on the current statuses of the members.

8. The management method according to one of the preceding claims, further comprising a step (100) of changing the current status of a user, comprising:
- the terminal of the user sending (120) a status change request to the server,
- the server updating (130) the current status of the user stored in memory, and
- the server sending (140) an update notification to at least one terminal of a user.

9. A computer program product, comprising instructions for implementing a method comprising:
- the receiving of a request to establish a communication with a group of users, the request comprising a communication rule (230, 230') selected among:
∘ a communication rule referred to as restricted according to which the communication is only to be established with members of the group of users having a current status available, and
∘ a communication rule referred to as extended according to which the communication is to be established with all members of the group of users regardless of whether their current status is available or unavailable, and
- the establishing of a communication (240) with a set of terminals of members of the group of users, said set being determined based on the communication rule and on current status values of users associated with the terminals, wherein the communication is established only with members of the group having a current status available if the communication rule is the restricted communication rule, and wherein the communication is established with all members of the group regardless of whether their current status is available or unavailable if the communication rule is the extended communication rule,
when it is executed by a processor.

10. A communications management server (20), comprising:
- a memory (22) configured to store:
∘ a list of user identifiers, each identifier being associated with a current status of the user, and
∘ a definition of at least one group of users containing the list of identifiers of the users who are members of the group,
- a processor (21) configured to execute the computer program product according to claim 9.

11. A computer system comprising a server (20) according to claim 10 and at least one telecommunication terminal (10), said terminal being adapted to execute a communication program and comprising:
- an interface for connecting to a multimedia data network,
- display means of a human-machine interface,
- an interface for entering instructions, and
- a processor, configured to:
∘ select (210) a communication rule among the restricted communication rule and the extended communication rule, and
∘ send (230') the selected communication rule to the server along with a request to establish a communication.
